# EUROPÄISCHE PATENTSCHRIFT

(11) **EP 1 698 552 B1**
(45) Veröffentlichungstag und Bekanntmachung des Hinweises auf die Patenterteilung: **07.07.2010**
(21) Anmeldenummer: 06004001.1
(22) Anmeldetag: 28.02.2006
(51) Int. Cl.: B64D 11/00

(54) **Anordnung eines ersten und eines zweiten Einrichtungsgegenstands**
Arrangement of first and second parts
Disposition d'un premier et d'un deuxième élément

(30) Priorität: 03.03.2005 DE 102005009750; 03.03.2005 US 658125 P
(43) Veröffentlichungstag der Anmeldung: 06.09.2006
(73) Patentinhaber: Airbus Operations GmbH, 21129 Hamburg (DE)
(72) Erfinder: Schotte, Hermann, 21614 Buxtehude (DE); Gonnsen, Johannes, 22767 Hamburg (DE)
(74) Vertreter: Dilg, Andreas

(56) Entgegenhaltungen:
- EP-A- 0 361 717
- WO-A-93/01088
- DE-A- 2 643 452
- GB-A- 2 288 973
- GB-A- 2 388 313
- US-A- 4 799 632
- US-A- 5 335 963
- US-A- 5 337 676

## Beschreibung

Die vorliegende Erfindung betrifft eine Anordnung. Insbesondere betrifft die vorliegende Erfindung eine Anordnung eines Passagiersitzes und eines Flugbegleitersitz sowie ein Flugzeug.

Komfort bedeutet für Passagiere ein ausreichend großes Platzangebot, das von den Passagieren eingenommen werden kann.

Eine großzügige und weiträumige Gestaltung eines Innenraums macht auf Passagiere einen besonders angenehmen Eindruck. Es muss oft ein Kompromiss eingegangen werden, da nicht jeder verfügbare Raum bzw. jede beliebige Fläche für die Aufstellung von Passagiersitzen oder die Gestaltung eines Aufenthaltraumes für Passagiere benutzt werden kann. So müssen beispielsweise Notausgänge freigehalten werden und können bei der Planung, beispielsweise zur Anordnung von Passagiersitzen, nicht berücksichtigt werden. Es müssen außerdem noch umfangreiche Sicherheits- und Versorgungseinrichtungen untergebracht werden, weshalb weiterer Platz nicht zur Verfügung steht.

Es gibt Einrichtungsgegenstände, wie beispielsweise Flugbegleitersitze, die nur während der Start- und Landephase eines Flugzeuges benutzt werden müssen.

Aus der Patentschrift US 4,460,215 ist eine Flugbegleiter-Klappstuhl-Anordnung, die mit einer Vielzahl von einzelnen Haltern an der Wand einer Flugzeugkabine befestigt wird, bekannt. Aus der Patentschrift US 3,594,037 ist ein Kabinenbegleitersitz von dünnem Profil bekannt, der sich automatisch zusammenfaltet, wenn der Beleger aufsteht.

Die Druckschrift EP 0 361 717 A beschreibt einen Flugzeugkabinenteiler bei dem einzelne Teilerpaneele an einem Teiler-Rahmen befestigt sind, bewegbar zwischen ausgewählten Positionen entlang der Flugzeugkabine.

Die Druckschrift WO 93/01088 A offenbart einen Flugzeugkabinen Teiler geformt aus gelenkig verbundenen Paneel Abschnitten welche sich zwischen zwei Passagiersitz-Reihen erheben.

Die Druckschrift GB 2 288 973 A beschreibt eine Flugzeug-Sitz-Einheit, welche umwandelbar ist, um entweder zwei oder drei Sitze nebeneinander zur Verfügung zu stellen, mit einem Rahmen der drei separate Teile aufweist, von denen der erste und der zweite seitlich relativ zueinander und zu dem dritten bewegbar sind, um die Einheit zwischen ihren zwei Konfigurationen umzuwandeln.

Die Druckschrift GB 2 388 313 A betrifft eine Sitz Anordnung welche nebeneinander einen ersten Sitz und einen zweiten Sitz aufweist, wobei jeder ein Sitzkissen und eine Sitz Rückenlehne aufweist und wobei zumindest ein Teil des Sitzkissens des zweiten Sitzes in einer Hoch-und-Runter-Richtung relativ zu dem Sitzkissen des ersten Sitzes verschiebbar ist und wobei zumindest ein Teil der Sitz Rückenlehne des zweiten Sitzes in einer Vor-und-Zurück-Richtung relativ zu der Sitz Rückenlehne des ersten Sitzes verschiebbar ist, um eine Bewegung eines der Sitze in einer seitlichen Richtung in Richtung zu den anderen zuzulassen.

Es ist eine Aufgabe der vorliegenden Erfindung, eine platzsparende Anordnung von Einrichtungsgegenständen anzugeben.

Diese Aufgabe wird durch eine Anordnung eines Passagiersitzes und eines Flugbegleitersitzes und durch ein Verkehrsmittel mit einer entsprechenden Anordnung mit den Merkmalen gemäß dem unabhängigen Patentanspruch gelöst.

Gemäß einem anderen Ausführungsbeispiel der vorliegenden Erfindung wird ein Flugzeug mit einer Anordnung mit den oben beschriebenen Merkmalen angegeben.

Es kann vorkommen, dass in abgetrennten Räumen aufgrund der räumlichen Begrenzung nur ein begrenzter Platz zur Verfügung gestellt wird. Trotzdem kann es verlangt sein, verschiedene Einrichtungsgegenstände auf diesem begrenzten Platz- oder Raumangebot unterzubringen. Einrichtungsgegenstände können beispielsweise Monumente, Innenausbaukomponenten, Sitze, insbesondere Passagiersitze, eine Trennwand, eine Sicherheits- oder eine Versorgungseinrichtung oder andere Einrichtungsgegenstände für das Flugzeuginnere sein.

Es kann sein, dass ein erster Einrichtungsgegenstand bzw. ein Sitz bewegbar sein soll. Durch die Bewegung kann es sein, dass ein Platz- oder Raumbedarf für den ersten Einrichtungsgegenstand größer ist als für einen entsprechenden statisch angebrachten ersten Einrichtungsgegenstand. Der zusätzliche Raumbedarf entsteht aufgrund der Auslenkung, die durch die Bewegung zumindest eines Teils des ersten Einrichtungsgegenstands verursacht wird.

Beispielsweise kann ein erster Einrichtungsgegenstand ein Sitz, insbesondere ein Passagiersitz sein. Ein Sitz kann eine Sitzfläche und eine Rückenlehne aufweisen. Es kann bei einem Sitz, insbesondere einem Liegesitz, vorkommen, dass der Sitz zwei Arbeitspositionen oder Betriebsmodi aufweist. Eine erste Arbeitsposition kann eine Sitzposition mit einer aufrechten Rückenlehne sein, während eine zweite Arbeitsposition eine Ruheposition sein kann. Die Ruheposition kann es einem Benutzer ermöglichen, in einer entspannten Haltung eine Liegeposition auf dem Sitz einzunehmen. Dabei kann die Rückenlehne zum Liegen umgeklappt werden. Für die Bewegung der Rückenlehne kann ein zusätzlicher Freiraum notwendig sein.

Ein zusätzlicher Freiraum könnte benötigt werden, wenn ein zweiter Einrichtungsgegenstand bzw. ein Flugbegleitersitz so nahe an dem Sitz angeordnet ist, dass sich in der zweiten Arbeitsposition der Sitz, insbesondere die Lehne, und der zweite Einrichtungsgegenstand nicht behindern. Bei einer Auslenkung der Lehne in Richtung des zweiten Einrichtungsgegenstands, könnte die nahe Anordnung des zweiten Einrichtungsgegenstand die Auslenkung der Lehne verhindern.

Der notwendige Platzbedarf oder Freiraum für die Bewegung, Neigung oder Auslenkung der Rückenlehne kann sich aus den Abmessungen des Sitzes ergeben. Beispielsweise kann bei einer Höhe der Rückenlehne von ca. 1100 mm ein Platzbedarf von ca. 150 bis 230 mm nötig sein.

Beispielsweise kann aber der benötigte Freiraum durch den zweiten Einrichtungsgegenstand belegt sein. Der zweite Einrichtungsgegenstand kann beispielsweise eine Trennwand oder ein Flugbegleitersitz oder ein anders Monument bzw. Ausbauelement sein. Es kann jedoch sein, dass der zweite Einrichtungsgegenstand einen Platz bzw. Freiraum beansprucht, der für die Bewegung, insbesondere die Schwenk- bzw. Neigbewegung einer Rückenlehne benötigt würde. Es kann allerdings sein, dass der zweite Einrichtungsgegenstand in dieser behindernden Position installiert werden muss, um beispielsweise Ausgänge, insbesondere Notausgänge bzw. freizuhaltende Bereiche oder Flächen nicht zu blockieren.

Bewegt sich der erste Einrichtungsgegenstand, insbesondere die Sitzlehne, auf den zweiten Einrichtungsgegenstand, beispielsweise einen Flugbegleitersitz oder eine Trennwand mit einem Flugbegleitersitz, zu, kann es von Vorteil sein, wenn zumindest ein Teil des zweiten Einrichtungsgegenstands zum Freigeben eines Raums zum Aufnehmen des ersten Einrichtungsgegenstands, insbesondere eines Teils des ersten Einrichtungsgegenstands, bewegbar ist. In anderen Worten bedeutet das, dass beispielsweise der zweite Einrichtungsgegenstand einen Platz, den der erste Einrichtungsgegenstand benötigt, freigibt. Der Platz oder Raum kann dabei ein beliebiges Raumvolumen lotrecht zu der Grundfläche des zweiten Einrichtungsgegenstands sein.

Bei dem Platz bzw. Raum kann es sich um einen Teilraum oder ein dreidimensionales Teilvolumen des von dem zweiten Einrichtungsgegenstand benötigten Raumes handeln. Dieser Raum ist senkrecht zu der Grundfläche des zweiten Einrichtungsgegenstands angeordnet. Der erste Einrichtungsgegenstand bzw. ein Teil des ersten Einrichtungsgegenstands kann nach Freigabe des Raums des zweiten Einrichtungsgegenstands in diesen neuen, freigegebenen Freiraum eindringen.

Es kann somit eine zeitliche Nutzung des ersten und zweiten Einrichtungsgegenstands berücksichtigt werden. Dabei ist die Zeit abgebildet auf eine Nutzung der verschiedenen Betriebsmodi. Die beiden Betriebsmodi des Sitzes können nicht gleichzeitig stattfinden.

Beispielsweise kann der erste Einrichtungsgegenstand ein Flugbegleitersitz und der zweite Einrichtungsgegenstand ein Passagiersitz mit einem zumindest teilweise klappbaren Rückenteil bzw. einer Rückenlehne sein. Insbesondere bei einem Flugzeug bzw. in einem Innenbereich eines Flugzeugrumpfes kann es eine unterschiedliche Nutzung des Flugbegleitersitzes bzw. Passagiersitzes zu unterschiedlichen Zeiten geben. Während dem Start und der Landung muss die Rückenlehne eines Passagiersitzes aufrechtgestellt werden. Beispielsweise kann es sich dabei um einen ersten Betriebsmodus handeln. Während Start und Landung nimmt die Kabinenmannschaft ihre Plätze auf den Flugbegleitersitzen ein. Ein Flugbegleitersitz kann einen Rückenbereich, insbesondere eine Trennwand aufweisen, die in einen Raumbereich des Flugzeuginneren hereinragt.

Während des Fluges kann es vorkommen, dass die Flugbegleitersitze nicht benutzt werden. Während des Reisefluges gehen zumeist die Flugbegleiter ihren Tätigkeiten nach. Daher bleiben ihre Flugbegleitersitze frei. Während der Flugphase kann es Passagieren erlaubt sein, die Rückenlehnen ihres Sitzes zu verstellen. Insbesondere kann für eine Ruhe- bzw. Schlafphase eine Neigung der Rückenlehne gewünscht werden. Befinden sich der Flugbegleitersitz und Passagiersitz nahe zusammen, kann die Neigung der Rückenlehne durch den beanspruchten Raum des Flugbegleitersitzes behindert werden.

Kann jedoch der unbenutzte Flugbegleitersitz, insbesondere die Trennwand, weiter insbesondere ein Teil davon, aus dem hinderlichen Raumbereich bewegt werden, so ist eine Neigung, insbesondere eine weitere Neigung der Rückenlehne des Passagiersitzes möglich. Der Passagiersitz kann also in einem zweiten Betriebsmodus betrieben werden.

Vorteilhaft behindert so der zweite Einrichtungsgegenstand, insbesondere der Flugbegleitersitz nicht den ersten Einrichtungsgegenstand, insbesondere den Passagiersitz mit seiner beweglichen Komponente, beispielsweise der beweglichen Rückenlehne. Somit lassen sich Mindestgrößen von Flächen, beispielsweise Aufenthaltsflächen oder Ein/Ausstiegsflächen, einhalten, obwohl nicht jede beliebige Fläche genutzt werden kann.

Gemäß einem Ausführungsbeispiel der vorliegenden Erfindung ist der Flugbegleitersitz zum automatischen Freigeben des Raumes ausgestaltet. Vorteilhaft kann dadurch der hinderliche Teil des Flugbegleitersitzes automatisch aus dem störenden Bereich entfernt werden. Zur automatischen Freigabe kann der Flugbegleitersitz eine Einrichtung aufweisen, die beispielsweise eine Nicht-Benutzung des Flugbegleitersitzes erkennt und somit automatisch den vom Flugbegleitersitz belegten Raum freigibt. Es kann aber auch eine Auslösung der Automatik durch einen Benutzer erfolgen.

Beispielsweise kann der zweite Einrichtungsgegenstand eine Klappe aufweisen, die durch das Gewicht eines Benutzers heruntergeklappt wird. Fällt des Gewicht eines Benutzers weg, so kann die Klappe automatisch wegklappen und eine Bewegung von zumindest einem Teil des zweiten Einrichtungsgegenstands verursachen. Beispielsweise kann aber auch eine Automatik eine Auslöseeinrichtung sein, insbesondere ein Knopf oder ein Hebel, nach dessen Betätigung die Bewegung des Teils des zweiten Einrichtungsgegenstands ausgelöst wird.

Vorteilhaft ist durch eine Automatik keine oder nur eine geringe zusätzliche Kraft zur Entfernung des zumindest einen Teils des zweiten Einrichtungsgegenstands aus dem hinderlichen Bereich nötig. Dadurch wird die Bedienung des zweiten Einrichtungsgegenstands vereinfacht. Beispielsweise kann die automatische Freigabe auch mittels elektromechanischer Wandler durchgeführt werden.

Gemäß einem weiteren Ausführungsbeispiel der vorliegenden Erfindung ist eine Bewegung des zumindest einen Teils des Flugbegleitersitzes mit einer Bewegung des zumindest einen Teils des Passagiersitzes gekoppelt.

Vorteilhaft lässt sich somit eine Verbindung zwischen der Bewegung des ersten und der Bewegung des zweiten Einrichtungsgegenstands herstellen. Dadurch kann erreicht werden, dass der zweite Einrichtungsgegenstand dem ersten Einrichtungsgegenstand den nötigen Freiraum dann zur Verfügung stellt, wenn der zweite Einrichtungsgegenstand diesen Freiraum für seine Bewegung benötigt. Beispielsweise kann es sich um eine mechanische oder eine elektrische Kopplung handeln.

Die gekoppelte Bewegung zwischen dem ersten und zweiten Einrichtungsgegenstand muss nicht gleichmäßig bzw. gleichförmig ablaufen. Das bedeutet, dass eine Rückwärtsbewegung des zumindest einen Teils des ersten Einrichtungsgegenstands eine Vorwärtsbewegung, also in entgegengesetzter Richtung, des zumindest einen Teils des zweiten Einrichtungsgegenstands zur Folge haben kann. Andererseits kann eine schnelle Bewegung eines Teils des ersten Einrichtungsgegenstands auch zu einer langsamen Bewegung eines Teils des zweiten Einrichtungsgegenstands führen und umgekehrt. Zur Umformung der Bewegung können beispielsweise Gelenke, Getriebe oder Zahnräder in beliebiger Kombination eingesetzt werden.

Es kann sich bei dem zweiten Einrichtungsgegenstand um einen Passagierbegleitsitz, eine Trennwand und insbesondere um eine Trennwand, die einen weiteren Einrichtungsgegenstand aufweist, handeln. Beispielsweise kann ein weiterer Einrichtungsgegenstand an der Trennwand wiederum ein Passagiersitz sein. Das heißt, ein Flugbegleitersitz kann in einer Trennwand integriert sein. Eine Trennwand kann zur räumlichen Abtrennung eines Bereiches dienen. Sie kann aber auch als Informationsplattform dienen. An der Trennwand können Informationen wie Plakate oder elektronische Daten angezeigt werden. Beispielsweise kann mittels einer Trennwand aber auch ein Luftzug für Passagiere vermieden werden. Ebenso kann eine Trennwand der Schallisolation dienen.

Gemäß einem weiteren Ausführungsbeispiel der vorliegenden Erfindung kann der Flugbegleitersitz zumindest eine Schwenkeinrichtung, zum Beispiel ein Gelenk, zum Schwenken des zumindest einen Teils des Flugbegleitersitzes aufweisen. Das Gelenk kann zwischen Teilen des Flugbegleitersitzes angeordnet sein. Dadurch kann ermöglicht werden, dass nur ein Teilbereich des Flugbegleitersitzes geschwenkt wird, falls ein zusätzlicher Raum beansprucht wird. Ein Gelenk kann ermöglichen, dass der Flugbegleitersitz, insbesondere ein Teil davon, fest mit einem Boden, insbesondere Flugzeugboden, verbunden ist, während ein Teilbereich des Flugbegleitersitzes beweglich ist und einen Raum freigeben kann.

Gemäß einem weiteren Ausführungsbeispiel der vorliegenden Erfindung weist der Flugbegleitersitz eine Verschiebeeinrichtung, zum Beispiel ein Gleitlager, zum Verschieben des zumindest einen Teils des Flugbegleitersitzes auf. Vorteilhaft kann der Flugbegleitersitz komplett den von ihm benötigen Raumbereich freigeben. Mittels einer Gleitschiene kann es ermöglicht werden, dass ein Einrichtungsgegenstand, insbesondere eine Trennwand, in einer Zeit, in der er nicht benötigt wird, in einen freien Bereich verschoben wird. Der Bereich, in den der zweite Einrichtungsgegenstand verschoben wird, kann frei sein, da er zu der Zeit in dem der von dem zweiten Einrichtungsgegenstand beanspruchte Raum benötigt wird, nicht benötigt oder benutzt wird.

Gemäß einem weiteren Ausführungsbeispiel der vorliegenden Erfindung ist die Verschiebeeinrichtung eine Sitzschiene. Insbesondere bei einem Flugzeug, in dem Monumente bzw. Einrichtungsgegenstände auf Sitzschienen montiert werden können, kann es vorteilhaft sein, wenn der Flugbegleitersitz eine Verschiebeeinrichtung oder ein Gleitlager, das auf eine Sitzschiene passt, aufweist. Dadurch kann die Montage des Flugbegleitersitzes vereinfacht werden.

Gemäß einem weiteren Ausführungsbeispiel der vorliegenden Erfindung wird eine Anordnung angegeben, bei der der Flugbegleitersitz ein elastisches Element zum Schwenken des zumindest einen Teil des Flugbegleitersitzes aufweist. Das elastische Element kann zwischen Teilen des Flugbegleitersitzes angeordnet sein.

Das elastische Element kann beispielsweise ein Gummielement oder ein Federelement sein. Vorteilhaft kann ein Teil des zweiten Einrichtungsgegenstands, der ein elastisches Element aufweist, leicht geneigt, gekippt oder verschoben werden. Dadurch kann eine Auslenkung des Teils des zweiten Einrichtungsgegenstands entstehen. Diese Auslenkung kann gegen die Rückholkraft eines elastischen Elements erfolgen. Durch die Rückholkraft des elastischen Elements wird bei Loslassen des Teils des zweiten Einrichtungsgegenstands der Teil des zweiten Einrichtungsgegenstands in seine Ausgangsposition zurückbewegt.

Eine Verschiebeeinrichtung, eine Schwenkeinrichtung, ein Gelenk, ein Gleitlager oder ein elastisches Element bieten den Vorteil, dass sie leicht in einem vorhandenen Einrichtungsgegenstand nachgerüstet werden können. Durch die Ausübung von Druck oder Koppelung an dem zumindest einen Teil des ersten Einrichtungsgegenstand kann eine Bewegung des zumindest einen Teils des zweiten Einrichtungsgegenstands erfolgen. Beispielsweise kann diese Bewegung eine Neigung oder eine Linearbewegung sein.

Insbesondere kann auch eine bereits vorhandene bzw. mit konventionellen Passagiersitzen ausgestattete Flugzeugkabine oder ein Flugzeuginnenraum mit der erfindungsgemäßen Anordnung versehen werden.

Gemäß einem weiteren Ausführungsbeispiel der vorliegenden Erfindung wird eine Anordnung angegeben, bei der der Flugbegleitersitz zumindest einen oberen und zumindest einen unteren Teil aufweist. Der zumindest eine obere Teil des Flugbegleitersitzes ist in den zumindest einen unteren Teil des Flugbegleitersitzes versenkbar. Der obere Teil ist dabei weiter von der Befestigung, beispielsweise einer Fußbodenfläche, entfernt als der untere Teil. Durch die Versenkung des zumindest einen oberen in den zumindest einen unteren Teil kann ein Raumbereich über dem unteren Teil des Flugbegleitersitzes freigemacht werden. Teleskopartig kann somit die Höhe, insbesondere die Länge, des Flugbegleitersitzes verringert werden. Der dadurch gewonnene Raum kann für die Bewegung der Rückenlehne des Passagiersitzes, verwendet werden.

Gemäß einem weiteren Ausführungsbeispiel der vorliegenden Erfindung wird ein Flugzeug angegeben, bei dem der Flugbegleitersitz vor dem Ausgang bzw. in einem Ausgangsbereich des Flugzeugs angeordnet ist. Insbesondere wird ein Flugzeug angegeben, bei dem der Flugbegleitersitz zwischen einem Sitz und einem Ausgang des Verkehrsmittels angeordnet ist.

Bei einem Verkehrsmittel kann es nötig sein, einen Ausgang, insbesondere eine Ausgangstür oder einen Ein- oder Ausgangsbereich, während einer bestimmten Zeit, beispielsweise der Ein- oder Ausstiegszeit, freizuhalten. Der freigehaltene Bereich kann beispielsweise während einer Nutzungszeit des Verkehrsmittels ungenutzt sein. Den Ausgangsbereich kann, bei einer Anordnung des zweiten Einrichtungsgegenstandes vor dem Ausgangsbereich, der zumindest eine Teil des zweiten Einrichtungsgegenstands zur Raumfreigabe benutzen. Dazu kann der zumindest eine bewegliche Teil des zweiten Einrichtungsgegenstands in den Ausgangsbereich in einer Zeit, in der der Ausgangsbereich nicht benutzt wird, verschoben oder ausgelenkt werden.

Vorteilhaft kann durch diese Verschiebung des zumindest einen Teils des zweiten Einrichtungsgegenstands eine Bewegung des zumindest einen Teils des ersten Einrichtungsgegenstands in Richtung des zweiten Einrichtungsgegenstands ermöglicht werden. Dies ist insbesondere vorteilhaft, wenn das Verkehrsmittel ein Flugzeug ist. Bei einem Flugzeug benutzen Flugbegleiter die in den Ausgangsbereichen des Flugzeuges angebrachten Flugbegleitersitze. Die Zeit, in der die Flugbegleiter die Flugbegleitersitze benutzen, ist die Take-Off-Zeit bzw. die Landing-Zeit, also die Zeit während Start und Landung. Während des Fluges werden die Flugbegleitersitze nicht benutzt. Sie können während dieser Zeit in einen Bereich des Ausgangs verschoben bzw. geneigt werden. Dadurch kann ein zusätzlicher Platz beispielsweise für Sitze, insbesondere Passagiersitze, geschaffen werden.

Im Folgenden werden vorteilhafte Ausführungsbeispiele der vorliegenden Erfindung mit Verweise auf die Figuren beschrieben:
- Fig. 1: zeigt eine Anordnung eines Passagier- und Flugbegleitersitzes gemäß einem Ausführungsbeispiel der vorliegenden Erfindung.
- Fig. 2: zeigt einen Flugbegleitersitz und einen Passagiersitz in einem ersten Betriebsmodus gemäß einem Ausführungsbeispiel der vorliegenden Erfindung.
- Fig. 3: zeigt einen Flugbegleitersitz und einen Passagiersitz in einem zweiten Betriebsmodus gemäß einem Ausführungsbeispiel der vorliegenden Erfindung.
- Fig.4: zeigt eine weitere Anordnung eines Flugbegleitersitzes und eines Passagiersitzes in einem ersten Betriebsmodus gemäß einem Ausführungsbeispiel der vorliegenden Erfindung.

- Fig. 5: zeigt eine weitere Anordnung eines Flugbegleitersitzes und eines Passagiersitzes in einem zweiten Betriebsmodus gemäß einem Ausführungsbeispiel der vorliegenden Erfindung.
- Fig. 6: zeigt eine Draufsicht des Innenbereichs eines Flugzeuges mit einer Anordnung gemäß einem Ausführungsbeispiel der vorliegenden Erfindung.
- Fig. 7: zeigt einen Ausschnitt aus einem Flugzeuginneren mit einer Anordnung gemäß einem Ausführungsbeispiel der vorliegenden Erfindung.

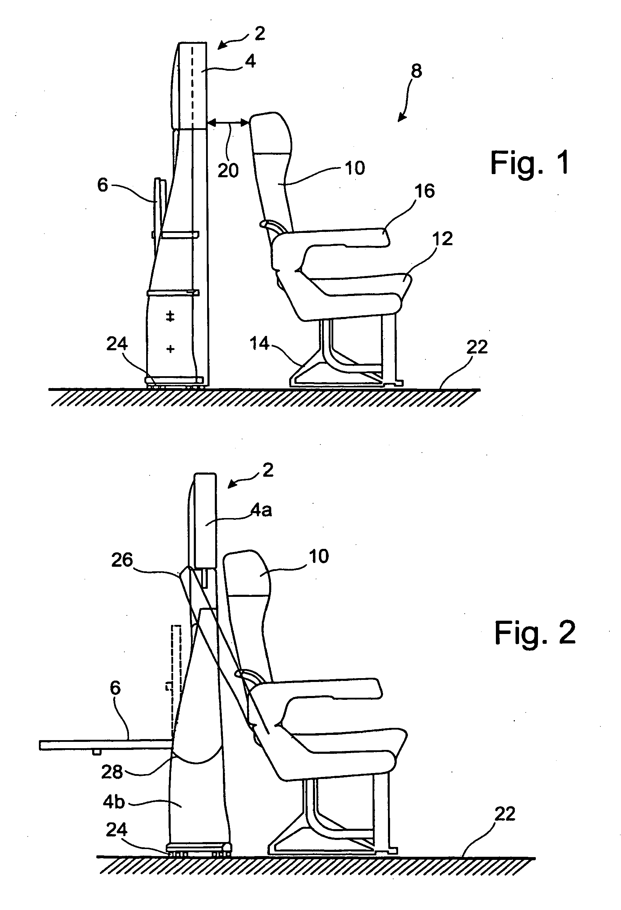

Die Darstellungen in den Figuren sind schematisch und nicht maßstäblich. In der folgenden Beschreibung der Fig. 1 bis Fig. 7 werden die gleichen Bezugsziffern für gleiche oder sich entsprechende Elemente verwendet.

Fig. 1 zeigt die Anordnung eines ersten Einrichtungsgegenstands 8 und eines zweiten Einrichtungsgegenstands 2. Der erste Einrichtungsgegenstand 8 ist ein Passagiersitz 8 und der zweite Einrichtungsgegenstand 2 ist ein Flugbegleitersitz 2. Der Flugbegleitersitz 2 weist eine Trennwand 4 und eine Sitzfläche 6 auf. Der Passagiersitz 8 und der Flugbegleitersitz 2 sind auf dem Boden 22 eines Flugzeuges montiert. Der Passagiersitz 8 und der Flugbegleitersitz 2 sind in einem Abstand 20 voneinander angeordnet. Dabei befindet sich der Flugbegleitersitz 2 hinter dem Passagiersitz 8. Hinten wird dabei als die, bei der normalen Nutzung des Passagiersitz 8, im Rückenbereich eines Passagier befindliche Richtung definiert.

Der Passagiersitz 8 ist mittels eines Fußgestells 14 an dem Fußboden 22 befestigt. Auf dem Fußgestell 14 ist die Armlehne 16 und Sitzpolster 12 montiert. Auf dem Sitzpolster 12 kann sich ein Fluggast oder Passagier setzen. Dabei weist seine Blickrichtung nach vorne. An der Armlehne 16 ist die Rückenlehne 10 beweglich gelagert. Die Rückenlehne 10 lässt sich in Richtung des Flugbegleitersitzes 2 bewegen.

Der Abstand 20 definiert den Bewegungsraum der Lehne 10 des Passagiersitzes 8. Bei einer Bewegung der Rückenlehne 10 in diesem Bereich 20 findet keine Behinderung der Rückenlehne 10 durch den Flugbegleitersitz 2 statt.

In Fig. 1 ist eine Sitzposition dargestellt. Die Rückenlehne 10 des Passagiersitzes 8 ist in einer aufrechten Position, d.h. sie steht im Wesentlichen senkrecht zur Bodenfläche 22. Dadurch ergibt sich ein fester Abstand 20 zwischen Rückenlehne 10 und Flugbegleitersitz 2, insbesondere der Trennwand 4 des Flugbegleitersitzes 2. Der Flugbegleitersitz 2 weist eine Sitzfläche 6 auf.

In Fig. 1 ist die Sitzfläche 6 senkrecht zum Fußboden 22. Die Stellung der Sitzfläche 6 senkrecht zu Fußboden 22 bedeutet, dass der Flugbegleitersitz 2 nicht benutzt wird. Zur Benutzung des Flugbegleitersitzes 2 wird die Sitzfläche 6 parallel zur Fußbodenfläche 22 geklappt. Dadurch kann sich ein Flugbegleiter auf die Sitzfläche 6 setzen.

Der Abstand der festen Montage des Flugbegleitersitzes 2 mit Befestigung 24 am Fußboden 22 und die feste Montage des Passagiersitzes 8 mittels Fußgestell 14 am Fußboden 22 bestimmt den Abstand 20 zwischen Rückenlehne 10 und Trennwand 4. Abstand 20 ist der Freiraum, in dessen Ausdehnung sich die Rückenlehne in Richtung Trennwand 4 bewegen lässt.

Der notwendige Freiraum für die Neigung der Rückenlehne 10 ergibt sich aus den Abmessungen des Passagiersitzes 8. Bei einer Höhe der Rückenlehne 10 von ca. 1100 mm ergibt sich ein Platzbedarf 20 von ca. 150 bis 230 mm. Der Freiraum 20 kann aufgrund der zu nahen Montage des Passagiersitzes 8 und des Flugbegleitersitzes 2 den nötigen Freiraum für die vollständige Neigung der Rückenlehne 10 einschränken.

Die Sitzfläche 6 des Flugbegleitersitzes 2 ist während eines ersten Betriebsmodus in einer waagerechten Position, sodass die Kabinenmannschaft bzw. ein Flugbegleiter auf dieser Sitzfläche 6 Platz nehmen kann.

Fig. 2 zeigt ebenfalls angedeutet die Sitzrückenlehne 26 in einer vollständig geneigten Position. Der Flugbegleitersitz 2 ist in zwei durch das Gelenk 28 getrennte Teile geteilt. Die beiden Teile des Flugbegleitersitzes sind ein oberer Teil 4a und ein unterer Teil 4b. Dabei ist zu sehen, dass es zu einer Überschneidung der Rückenlehne 26 und dem oberen Teil 4a des Flugbegleitersitzes 2 kommt. Um die vollständige Neigung der Rückenfläche 26 zu ermöglichen, muss der obere Teil 4a des Flugbegleitersitzes 2 weggeklappt werden, um einen Raumbereich für die Rückenlehne 26 freizumachen.

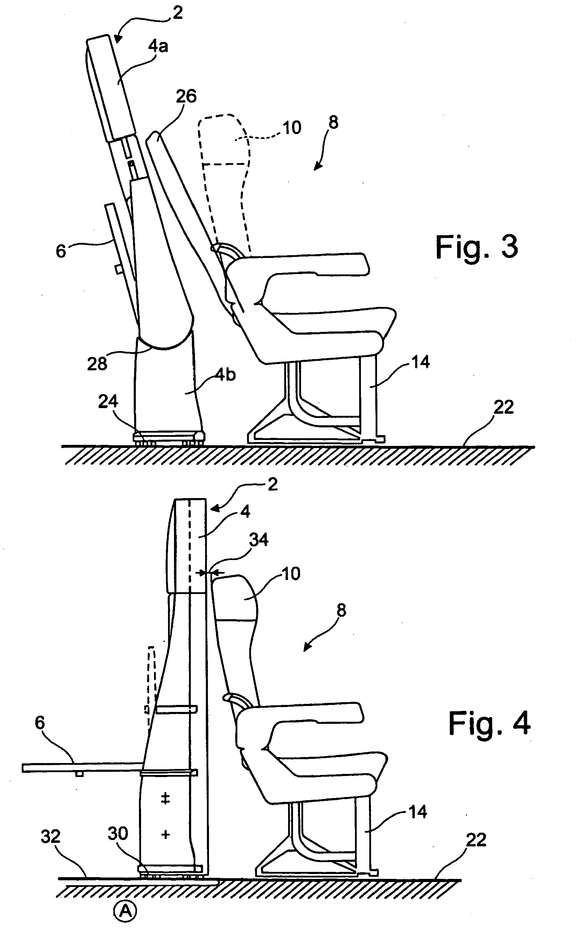

Fig. 3 zeigt eine Neigung des oberen Teils 4a um des Gelenk 28 des Flugbegleitersitzes 2 gegen den Uhrzeigersinn. Der untere Teil 4b des Flugbegleitersitzes 2 ist mittels Befestigung 24 am Fußboden 22 fixiert und ist nicht geneigt.

Ebenso ist der Passagiersitz 8 mittels des Fußgestells 14 am Fußboden 22 fixiert. Dadurch ist der Abstand zwischen dem unterem Teil 4b des Flugbegleitersitzes 2 und dem Fußgestell 14 fest vorgegeben. Mittels Neigung des oberen Teils 4a lässt sich oberhalb des unteren Teils 4b des Flugbegleitersitzes 2 Platz schaffen, um die vollständige Neigung der Rückenlehne 26 zu ermöglichen. Fig. 3 zeigt die Anordnung in einem Cruise Mode oder während des Flugbetrieb.

Während des Reiseflugs im zweiten Betriebsmodus gehen die Flugbegleiter ihren Tätigkeiten nach und der Flugbegleitersitz 2 bleibt frei. Das bedeutet, dass die Sitzfläche 6 im Wesentlichen parallel zu dem oberen Teil 4a des Flugbegleitersitzes 2 geklappt ist. Die Neigung der Rückenlehne 26 in Richtung Flugbegleitersitz 2 kann auf Wunsch der Passagiere individuell zwischen der maximalen Neigung 26 und der senkrechten Position 10 der Rückenlehne gewählt werden. Es gibt keine Einschränkung gegenüber anderen Passagiersitzen an anderen Stellen. Das heißt, der Flugbegleitersitz 2 bzw. der obere Teil 4a des Flugbegleitersitzes 2 behindern die Neigung der Rückenlehne 26 nicht.

Der obere Teil 4a kann automatisch beim Zurückklappen der Sitzfläche 6 in die Position im Wesentlichen parallel zu dem oberen Teil 4a geneigt werden. Der Lock des Flugbegleitersitzes im ersten Betriebsmodus kann durch das Herunterklappen der Sitzfläche des Flugbegleiters erfolgen. Dieses Prinzip muss von dem Flugbegleitungspersonal nicht bedient werden. Ebenso ist eine Kopplung zwischen der Rückenlehne 10 und dem oberen Teil 4a des Flugbegleitersitzes 2 möglich, sodass gleichzeitig mit der Neigung der Rückenlehne 10 der obere Teil 4a des Flugbegleitersitzes 2 bewegt wird. Ebenso wie ein Flugbegleitersitz 2 kann auch eine Trennwand mit einem Knickgelenk 28 ausgestattet sein.

Fig. 4 zeigt den Passagiersitz 8 und den Flugbegleitersitz 2 in dem ersten Betriebsmodus. Der erste Betriebsmodus bezeichnet die Start- oder Landephase eines Flugzeugs. Dabei ist die Sitzfläche 6 waagerecht zum Flugzeugboden 22 geklappt. Ein Flugbegleiter kann in dieser Phase auf der Sitzfläche 6 Platz nehmen. Der Flugbegleitersitz 2 ist mittels Linear- oder Gleitlager 30 auf der Sitzschiene 32 angeordnet. Im ersten Betriebsmodus befindet sich der Flugbegleitersitz in der Position auf der Sitzschiene 32, die mit dem Buchstaben A gekennzeichnet ist.

Dadurch weisen die Rückenlehne 10 des Passagiersitzes und die Trennwand 4 des Flugbegleitersitzes 2 einen Abstand 34 auf. Der Passagiersitz 8 ist mittels Fußgestell 14 am Flugzeugboden 22 oder ebenfalls an der Sitzschiene 32 befestigt.

Die Sitzschiene 32 entspricht einer im Flugzeugbau üblichen Sitzschiene und ist unterhalb der Oberfläche des Bodens 22 angeordnet. Das Gleitlager 30 ermöglicht eine Verschiebung des kompletten Flugbegleitersitzes 2 parallel zur Fußbodenoberfläche 22. Der Flugbegleitersitz 2 ist in Position A mit einer konstruktiv sicheren Arretierung befestigt. Diese sichere Arretierung lässt sich jedoch leicht von einem Bediener öffnen, um ein leichtes Verschieben des Flugbegleitersitzes 2 zu ermöglichen.

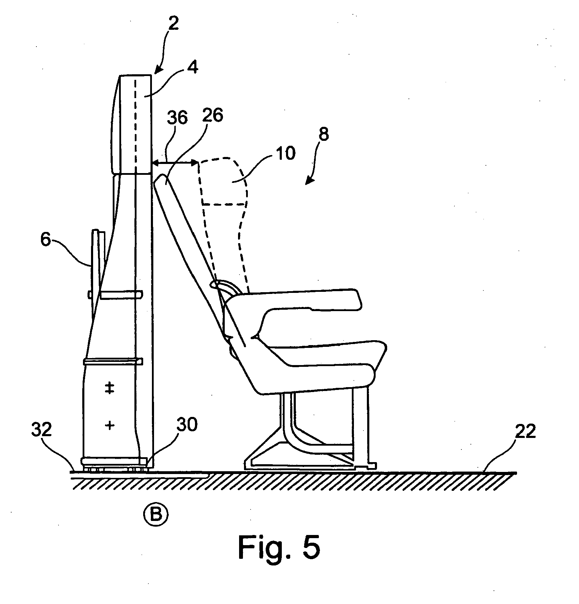

Fig. 5 zeigt die erfindungsgemäße Anordnung des Passagiersitzes 8 und des Flugbegleitersitzes 2 in einem zweiten Betriebsmodus. Der zweite Betriebsmodus, für den Flugbetrieb oder Cruise Mode, soll eine Neigung der Rückenlehne 26 des Passagiersitzes 8 ermöglichen. Um den Freiraum 36 für die Neigung der Rückenlehne 26 zu erhalten, wird der Flugbegleitersitz 2 während des Reiseflugs in Position B verschoben. Der Abstand 36 entspricht der Maximalneigung der Rückenlehne 26 aus der senkrechten Position.

Der Abstand oder Freiraum 36 gegenüber der senkrechten Neigung der Rückenlehne 10 ist in dieser Position größer als der Abstand 34 in Position A. Position B kann sich in einem während der Flugphase nicht benutzten Arbeitsraum oder einem Ausgangsraum befinden. Während dem Ein- bzw. Aussteigen in das Flugzeug sollen Passagiere nahe eines Ein- bzw. Ausgangs ausreichend Bewegungsfreiheit zum Gehen und Bewegen haben. Die Lehne 10 eines Passagiersitzes bleibt in ihrer senkrechten Position.

Für das bequeme Ein- und Aussteigen ist ein bestimmter Platz für den Flugbegleitersitz, nahe bei dem Passagiersitz, vorgesehen. Dadurch wird der Ein-/Ausstiegsbereich bzw. -fläche vergrößert.

Während des Fluges wird jedoch der Platz vor einem Ausgang nicht genutzt. Deshalb kann der Passagierbegleitsitz 2 in diesem Raum verschoben bzw. bewegt werden, um so einen Freiraum 36 zur Neigung der Rückenlehne 26 zur Verfügung zu stellen. In Position B ist der Flugbegleitersitz 2 ebenfalls mit einer konstruktiv sicheren Arretierung befestigt. Die Verstellung von Position A in Position B und umgekehrt kann ebenfalls automatisch erfolgen. Während des Fluges wird der Flugbegleitersitz 2 von dem Flugbegleiter nicht benutzt. Deshalb ist die Sitzfläche 6 in dem Flugbetrieb an die Trennwand 4 des Passagierbegleitersitzes geklappt.

Ein Linearlager hat den Vorteil, dass bei einem Verschieben des gesamten Flugbegleitersitzes 2, der Flugbegleitersitz 2 uneingeschränkt nutzbar ist.

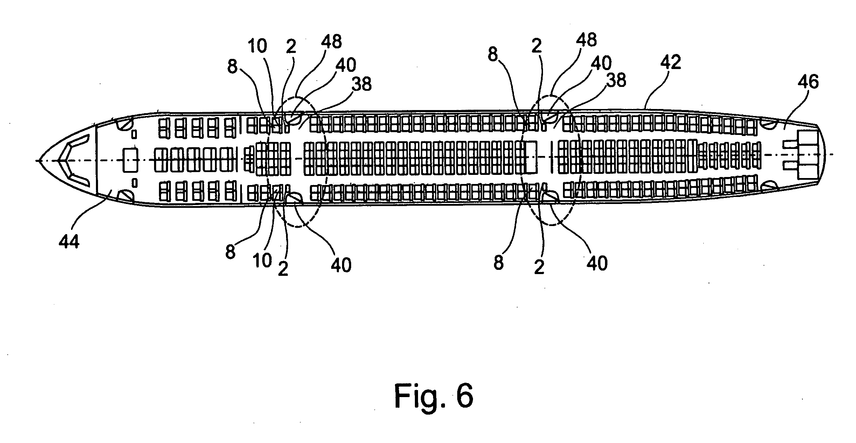

Fig. 6 zeigt die Draufsicht eines Innenraums eines Flugzeugrumpfes 42. Zwischen dem Flugzeugbug-Bereich 44 und dem Flugzeugheck-Bereich 46 sind Passagiersitze in Sitzreihen angeordnet. In den beiden Aufenthaltsbereichen 48 befinden sich jeweils zwei gegenüberliegende Türen 40, eine Ein-/Ausstiegs- oder Arbeitsfläche 38. Ebenso beinhaltet jeder Aufenthaltsbereich 48 eine Anordnung eines Passagiersitzes 8 mit, zwischen Passagiersitz 8 und Ein-Ausstiegsfläche 38 angeordnetem Flugbegleitersitz 2.

Um einen möglichst großen Ein- und Ausstiegsbereich 38 zur Verfügung zu stellen, wird der Flugbegleitersitz 2 möglichst nahe an den Passagiersitz 8 angeordnet. Dadurch behindert der Flugbegleitersitz 2 bzw. Cabin Attendant Seat 2 eine maximale Neigung der Rückenfläche 26 des Passagiersitzes 8. Um während des Fluges die Neigung der Rückenlehne 10 des Passagiersitzes 8 zu ermöglichen, kann der Flugbegleitersitz 2 oder ein Teil des Flugbegleitersitzes 2 in den Ein- oder Ausstiegsbereich 38, insbesondere den Aufenthaltsbereich 48, verschoben bzw. geneigt werden.

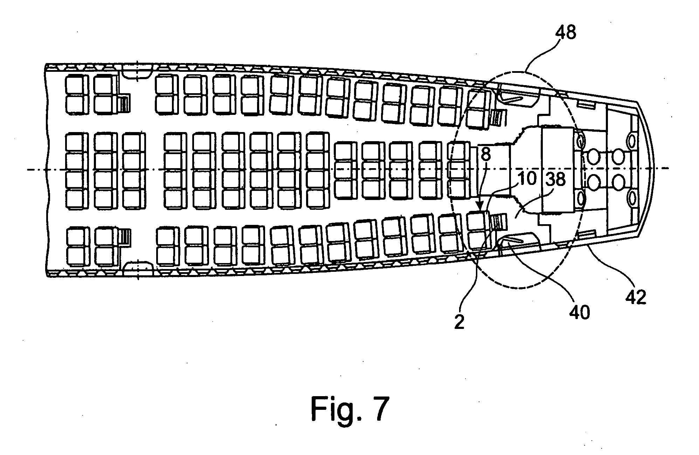

Fig. 7 zeigt einen Ausschnitt aus Fig. 6. Zu sehen ist der Flugzeugrumpf 42 mit der Ein-Ausgangstüre 40. Zum Besteigen des Flugzeuges wird von den Passagieren der Ein-/Ausstiegsbereich 38 genutzt. Die freie Fläche des Ein-/Ausstiegsbereiches 38 ist, um das Ein-Aussteigen der Fluggäste zu erleichtern, möglichst groß zu wählen. Deshalb wird der Flugbegleitersitz 2 möglichst nahe an dem Passagiersitz 8 angeordnet. Während der Einstiegsphase befindet sich die Rückenlehne 10 des Passagiersitzes 8 in einer aufrechten Position.

Während der Flugphase wird der Einstiegsbereich 38 nicht benutzt. Deshalb kann der Flugbegleitersitz 2 bzw. ein Teil des Flugbegleitersitzes 2 die Ein- bzw. Ausstiegsfläche 38 bzw. den Arbeitsraum 38 verwenden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, wobei ausschließlich der Wortlauf der Ansprüche den angestrebten Schutzbereich definiert. Bezugszeichen in den Ansprüchen sind nicht als Einschränkung anzusehen.

## Patentansprüche

1. Anordnung, umfassend:
einen Passagiersitz (8) mit einer beweglichen Rückenlehne (10); und
einen Flugbegleitersitz (2) mit einem Rückenbereich,
wobei der Passagiersitz (8) und der Flugbegleitersitz (2) ausgebildet sind, um aus einem ersten Betriebsmodus in einen zweiten Betriebsmodus überführt zu werden;
wobei der Rückenbereich des Flugbegleitersitzes eine dem Passagiersitz (8) zugewandte Seite und eine dem Passagiersitz (8) abgewandte Seite aufweist, wobei an der dem Passagiersitz (8) abgewandten Seite des Rückenbereiches eine Sitzfläche des Flugbegleitersitzes angeordnet ist;
wobei zur Überführung des Passagiersitzes (8) und des Flugbegleitersitzes (2) aus dem ersten Betriebsmodus in den zweiten Betriebsmodus die Rückenlehne (10) des Passagiersitzes (8) in Richtung des Flugbegleitersitzes (2) bewegbar ist und
zumindest der Rückenbereich (4a) des Flugbegleitersitzes (2) zum Freigeben eines Raumes zum Aufnehmen der Rückenlehne (10) des Passagiersitzes (8) bewegbar ist.

2. Anordnung nach Anspruch 1,
wobei der Flugbegleitersitz (2) zum automatischen Freigeben des Raumes ausgestaltet ist, wenn die Rückenlehne (10) des Passagiersitzes (8) in Richtung des Flugbegleitersitzes (2) bewegt wird.

3. Anordnung nach Anspruch 1 oder 2,
wobei eine Bewegung zumindest des Rückenbereichs (4a) des Flugbegleitersitzes (2) mit der Bewegung der Rückenlehne (10) des Passagiersitzes (8) gekoppelt ist.

4. Anordnung nach einem der Ansprüche 1 bis 3,
wobei der Flugbegleitersitz (2) eine Trennwand aufweist.

5. Anordnung nach einem der Ansprüche 1 bis 4,
wobei der Flugbegleitersitz (2) zumindest eine Schwenkeinrichtung (28) zum Schwenken zumindest des Rückenbereichs (4a) des Flugbegleitersitzes (2) aufweist.

6. Anordnung nach einem der Ansprüche 1 bis 5,
wobei der Flugbegleitersitz (2) eine Verschiebeeinrichtung (30) zum Verschieben zumindest des Rückenbereichs (4a) des Flugbegleitersitzes (2) aufweist.

7. Anordnung nach Anspruch 6,
wobei die Verschiebeeinrichtung (30) eine Sitzschiene (32) ist.

8. Anordnung nach einem der Ansprüche 1 bis 7,
wobei der Flugbegleitersitz (2) ein elastisches Element zum Schwenken zumindest des Rückenbereichs (4a) des Flugbegleitersitzes (2) aufweist.

9. Anordnung nach einem der Ansprüche 1 bis 8,
wobei der Flugbegleitersitz (2) einen oberen und einen unteren Teil aufweist;
wobei der obere Teil des Flugbegleitersitzes (2) in dem unteren Teil des Flugbegleitersitzes (2) versenkbar ist.

10. Flugzeug mit einer Anordnung nach einem der Ansprüche 1 bis 9.

11. Flugzeug nach Anspruch 10,
wobei der Flugbegleitersitz (2) in einem Ausgangsbereich des Flugzeuges angeordnet ist.

12. Flugzeug nach Anspruch 10 oder 11,
wobei der Flugbegleitersitz (2) zwischen einem Passagiersitz und einem Ausgang (40) des Flugzeuges angeordnet ist.

## Claims

1. Arrangement comprising:
a passenger seat (8) with a movable back rest (10); and
a flight attendant seat (2) with a back area,
wherein the passenger seat (8) and the flight attendant seat (2) are formed in order to be transferred from a first mode of operation into a second mode of operation;
wherein the back area of the flight attendant seat has a side facing toward the passenger seat (8) and a side facing away from the passenger seat (8), wherein a seat surface of the flight attendant seat is positioned on the side of the back area facing away from the passenger seat (8);
wherein for transfer of the passenger seat (8) and the flight attendant seat (2) from the first mode of operation into the second mode of operation the back rest (10) of the passenger seat (8) is movable in direction of the flight attendant seat; and
at least the back area (4a) of the flight attendant seat (2) is movable for freeing a space to receive the back rest (10) of the passenger seat (8).

2. Arrangement according to claim 1,
wherein the flight attendant seat (2) is formed to automatically free the space if the back rest (10) of the passenger seat (8) is moved in the direction of the flight attendant seat (2).

3. Arrangement according to claim 1 or 2,
wherein a movement of at least the back area (4a) of the flight attendant seat (2) is coupled to the movement of the back rest (10) of the passenger seat (8).

4. Arrangement according to one of the claims 1 to 3,
wherein the flight attendant seat (2) has a partition wall.

5. Arrangement according to one of the claims 1 to 4,
wherein the flight attendant seat (2) has at least one pivot device (28) for pivoting at least the back area (4a) of the flight attendant seat (2).

6. Arrangement according to one of the claims 1 to 5,
wherein the flight attendant seat (2) has a displacement device (30) for displacing at least the back area of the flight attendant seat (2).

7. Arrangement according to claim 6,
wherein the displacement device (30) is a seat rail (32).

8. Arrangement according to one of the claims 1 to 7,
wherein the flight attendant seat (2) has an elastic element for pivoting at least the back area of the flight attendant seat (2).

9. Arrangement according to one of the claims 1 to 8,
wherein the flight attendant seat (2) has an upper part and a lower part;
wherein the upper part of the flight attendant seat (2) being able to be lowered into the lower part of flight attendant seat (2).

10. Aircraft with an arrangement according to one of the claims 1 to 9.

11. Aircraft according to claim 10,
wherein the flight attendant seat (2) is positioned in an exit area of the aircraft.

12. Aircraft according to claims 10 or 11,
wherein the flight attendant seat (2) is positioned between a passenger seat and an exit (40) of the aircraft.

## Revendications

1. Agencement comprenant :
un siège de passager (8) avec un dossier mobile (10) ; et
un siège de personnel navigant (2) avec une zone de dossier,
agencement dans lequel
le siège de passager (8) et le siège de personnel navigant (2) sont réalisés pour être transférés d'un premier mode de service dans un second mode de service ;
la zone de dossier du siège de personnel navigant présente un côté tourné vers le siège de passager (8) et un côté opposé au siège de passager (8), une surface de siège du siège de personnel navigant étant disposée sur le côté de la zone de dossier, opposé au siège de passager (8) ;
le dossier (10) du siège de passager (8) est mobile en direction du siège de personnel navigant (2) pour le transfert du siège de passager (8) et du siège de personnel navigant (2) du premier mode de service dans le second mode de service et
au moins la zone de dossier (4a) du siège de personnel navigant (2) est mobile pour dégager un espace destiné à recevoir le dossier (10) du siège de passager (8).

2. Agencement suivant la revendication 1, dans lequel le siège de personnel navigant (2) est configuré pour le dégagement automatique de l'espace, lorsque le dossier (10) du siège de passager (8) est déplacé en direction du siège de personnel navigant (2).

3. Agencement suivant l'une des revendications 1 et 2, dans lequel un déplacement d'au moins la zone de dossier (4a) du siège de personnel navigant (2) est couplé au déplacement du dossier (10) du siège de passager (8).

4. Agencement suivant l'une des revendications 1 à 3, dans lequel le siège de personnel navigant (2) présente une cloison.

5. Agencement suivant l'une des revendications 1 à 4, dans lequel le siège de personnel navigant (2) présente au moins un dispositif de pivotement (28) pour faire pivoter au moins la zone de dossier (4a) du siège de personnel navigant (2).

6. Agencement suivant l'une des revendications 1 à 5, dans lequel le siège de personnel navigant (2) présente un dispositif de déplacement (30) pour déplacer au moins la zone de dossier (4a) du siège de personnel navigant (2).

7. Agencement suivant la revendication 6, dans lequel le dispositif de déplacement (30) est un rail de siège (32).

8. Agencement suivant l'une des revendications 1 à 7, dans lequel le siège de personnel navigant (2) présente un élément élastique pour le pivotement d'au moins la zone de dossier (4a) du siège de personnel navigant (2).

9. Agencement suivant l'une des revendications 1 à 8, dans lequel le siège de personnel navigant (2) présente une partie supérieure et une partie inférieure ; la partie supérieure du siège de personnel navigant (2) étant escamotable dans la partie inférieure du siège de personnel navigant (2).

10. Avion comprenant un agencement suivant l'une des revendications 1 à 9.

11. Avion suivant la revendication 10, dans lequel le siège de personnel navigant (2) est disposé dans une zone d'issue de l'avion.

12. Avion suivant l'une des revendications 10 ou 11, dans lequel le siège de personnel navigant (2) est disposé entre un siège de passager et une issue (40) de l'avion.
